# EUROPÄISCHE PATENTSCHRIFT

(11) **EP 2 021 850 B1**
(45) Veröffentlichungstag und Bekanntmachung des Hinweises auf die Patenterteilung: **07.07.2010**
(21) Anmeldenummer: 07725386.2
(22) Anmeldetag: 19.05.2007
(51) Int. Cl.: G02B 6/44, H02G 15/013

(54) **KABELMUFFE ZUR STRUKTURIERTEN ABLAGE BZW. HANDHABUNG VON IN LICHTWELLENLEITERKABELN GEFÜHRTEN LICHTWELLENLEITERN**
CABLE SLEEVE FOR THE STRUCTURED STORAGE AND HANDLING OF OPTICAL WAVEGUIDES GUIDED IN OPTICAL WAVEGUIDE CABLES
MANCHON DE CABLE POUR LA DEPOSE OU LA MANIPULATION STRUCTUREE DE FIBRES OPTIQUES PASSANT DANS DES CABLES A FIBRES OPTIQUES

(30) Priorität: 30.05.2006 DE 202006008654 U
(43) Veröffentlichungstag der Anmeldung: 11.02.2009
(73) Patentinhaber: CCS Technology, Inc., Wilmington, DE 19803 (US)
(72) Erfinder: KLUWE, Wolf, Peter, 58638 Iserlohn (DE); SYPLACZ, Roman, 58099 Hagen (DE); MÜLLER, Thorsten, 58708 Menden (DE)
(74) Vertreter: Sturm, Christoph
(86) Internationale Anmeldenummer: PCT/EP2007/004478
(87) Internationale Veröffentlichungsnummer: WO 2007/137718

(56) Entgegenhaltungen:
- WO-A-93/26069
- WO-A-96/32660
- WO-A-99/49548
- WO-A-99/56370
- US-A- 3 848 074
- US-A- 5 055 636
- US-A- 5 598 499
- US-A- 5 775 702

## Beschreibung

Die Erfindung betrifft eine Kabelmuffe zur strukturierten Ablage bzw. Handhabung von in Lichtwellenleiterkabeln geführten Lichtwellenleitern gemäß dem Oberbegriff des Anspruchs 1.

Kabelmuffen zur strukturierten Ablage bzw. Handhabung von in Lichtwellenleiterkabeln geführten Lichtwellenleitern werden in Lichtwellenleiterkabelnetzen zum Schutz von Spleißverbindungen an Verbindungsstellen von zwei Lichtwellenleiterkabeln sowie zum Schutz der Lichtwellenleiter an Abzweigstellen oder an Aufteilungsstellen von Lichtwellenleiterkabeln verwendet. Dabei müssen die Kabelmuffen die Kontinuität der Lichtwellenleiterkabel so gewährleisten, als wären die Lichtwellenleiterkabel nicht unterbrochen. Der strukturierten Ablage und schonenden Handhabung der Lichtwellenleiter kommt hierbei eine entscheidenden Rolle zu, damit die Übertragungseigenschaften der Lichtwellenleiter nicht negativ beeinträchtigt werden.

Eine Kabelmuffe mit den Merkmalen des Oberbegriffs des Anspruchs 1 ist aus der EP 0 646 294 B1 bekannt. So umfasst die dort offenbarte Kabelmuffe einen Abdeckkörper sowie einen in eine Öffnung des Abdeckkörpers einführbaren Dichtungskörper, wobei der Dichtungskörper ein gelartiges Dichtungsmaterial umfasst, welches zwischen zwei formstabilen Platten angeordnet ist. Nach der EP 0 646 294 B1 ist der Dichtungskörper in einem Hohlraum in Axialrichtung nach innen und außen in Bezug auf den Abdeckkörper verschiebbar, um Druckunterschiede zwischen einem Innendruck und Außendruck der Kabelmuffe auszugleichen. Abhängig von diesem Druckunterschied kommt der Dichtungskörper dabei an unterschiedlichen Anschlägen zur Anlage.

Eine weitere Kabelmuffe ist aus der US 5,455,391 bekannt, die ebenfalls einen Dichtungskörper umfasst, der zwei formstabile Endstücke und ein zwischen den beiden Endstücken angeordnetes, komprimierbares Gelelement umfasst. Nach der US 5,455,391 ist das Gelelement von Verspannelementen, weiche die beiden formstabilen Endstücke gegeneinander drücken, durchdrungen.

Hiervon ausgehend liegt der vorliegenden Erfindung das Problem zu Grunde, eine neuartige Kabelmuffe zur strukturierten Ablage bzw. Handhabung von in Lichtwellenleiterkabeln geführten Lichtwellenleitern zu schaffen. Dieses Problem wird dadurch gelöst, dass die eingangs genannte Kabelmuffe zur strukturierten Anlage bzw. Handhabung von in Lichtwellenleiterkabeln geführten Lichtwellenleitern durch die Merkmale des kennzeichnenden Teils des Anspruchs 1 weitergebildet ist. Erfindungsgemäß weist der Abdeckkörper einen Anschlag auf, an dem der Dichtungskörper mit einem innenliegenden, formstabilen Endstück anliegt, wobei ein Verschlusskörper mit einem außenliegenden, formstabilen Endstück des Dichtungskörpers unter Komprimierung des Geleiements verschraubbar ist, und wobei mindestens ein Kompensationselement die über den Verschlusskörper aufgebrachte Kraft speichert und auf das Gelelement permanent einen Kompressionsdruck ausübt.

Die erfindungsgemäße Kabelmuffe zeichnet sich durch einen einfachen Aufbau aus. In die Kabelmuffe einzuführende bzw. aus derselben auszuführende Lichtwellenleiterkabel lassen sich einfach abdichten. Die Abdict tung resultiert aus der Komprimierung des Gelelements und des oder jedes Kompensationselements. Das oder jedes Kompensationselement stellt einen Kompressionsdruck für das Gelelement bereit, um auch bei einer temperaturbedingten Änderung des Verhaltens des Gelelements eine gute Dichtwirkung desselben zu gewährleisten. Das oder jedes Kompensationselement speichert die beim Verschließen der Kabelmuffe über den Verschlusskörper aufgebrachte Kraft und beaufschlagt das Gelelement des Dichtungskörpers permanent mit dem Kompressionsdruck.

Vorzugsweise ist das oder jedes Kompensationselement als Elastomerring ausgebildet, der zwischen dem innenliegenden Endstück des Dichtungskörpers und dem vom Abdeckkörper gebildeten Anschlag angeordnet ist.

Nach einer vorteilhaften Weiterbildung weist der Verschlusskörper ein Innengewinde auf, über welches derselbe mit einem dem außenliegenden Endstück des Dichtungskörpers zugeordneten Außengewinde verschraubt ist.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, anhand der Zeichnung näher erläutert. In der Zeichnung zeigt:
- Fig. 1:: eine als Haubenmuffe ausgebildete, erfindungsgemäße Kabelmuffe zur strukturierten Ablage bzw. Handhabung von in Lichtwellenleiter- kabeln geführten Lichtwellenleitern in perspektivischer Ansicht,
- Fig. 2:: die erfindungsgemäße Kabelmuffe gemäß Fig. 1 in perspektivischer Explosionsansicht,
- Fig. 3:: einen Dichtungskörper der erfindungsgemäßen Kabelmuffe nach Fig. 1 und 2 in perspektivischer Explosionsansicht, und
- Fig. 4:: eine Abdeckhaube der erfindungsgemäßen Kabelmuffe nach Fig. 1 und 2 zusammen mit einem Kompensationselement der Kabelmuffe in perspektivischer Ansicht.

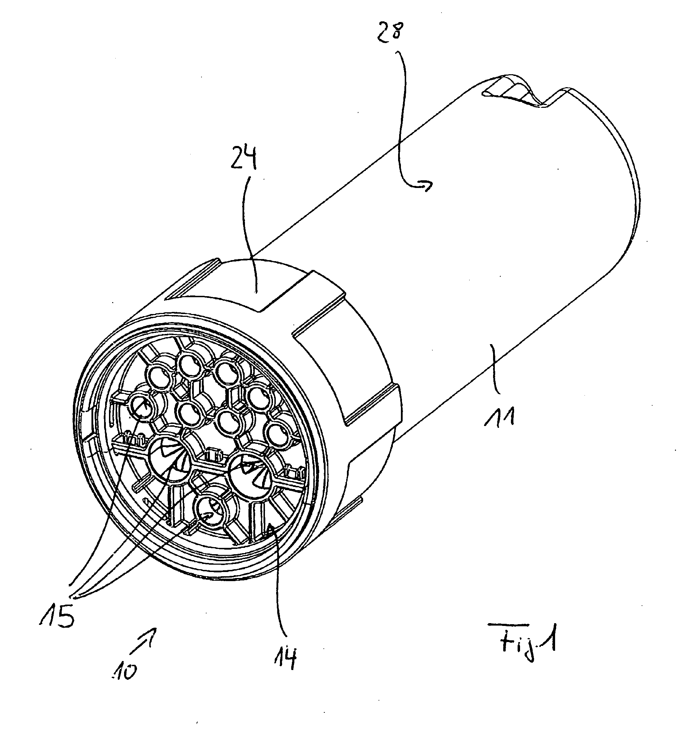

Unter Bezugnahme auf die Fig. 1 bis 4 wird nachfolgend die Erfindung anhand einer als Haubenmuffe ausgebildeten Kabelmuffe zur strukturierten Ablage bzw. Handhabung von in Lichtwellenleiterkabeln geführten Lichtwellenleitern im Detail beschrieben. Obwohl die Erfindung bei Haubenmuffen besonders vorteilhaft verwendet werden kann, ist die Erfindung auch bei anderen Muffentypen, zum Beispiel bei sogenannten Inline-Muffen, verwendbar.

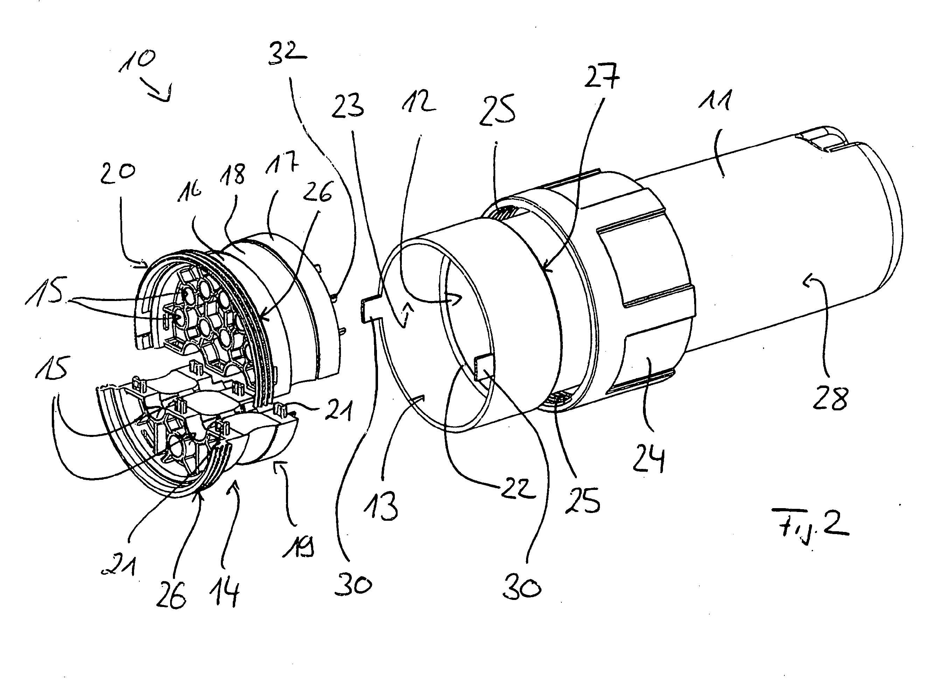

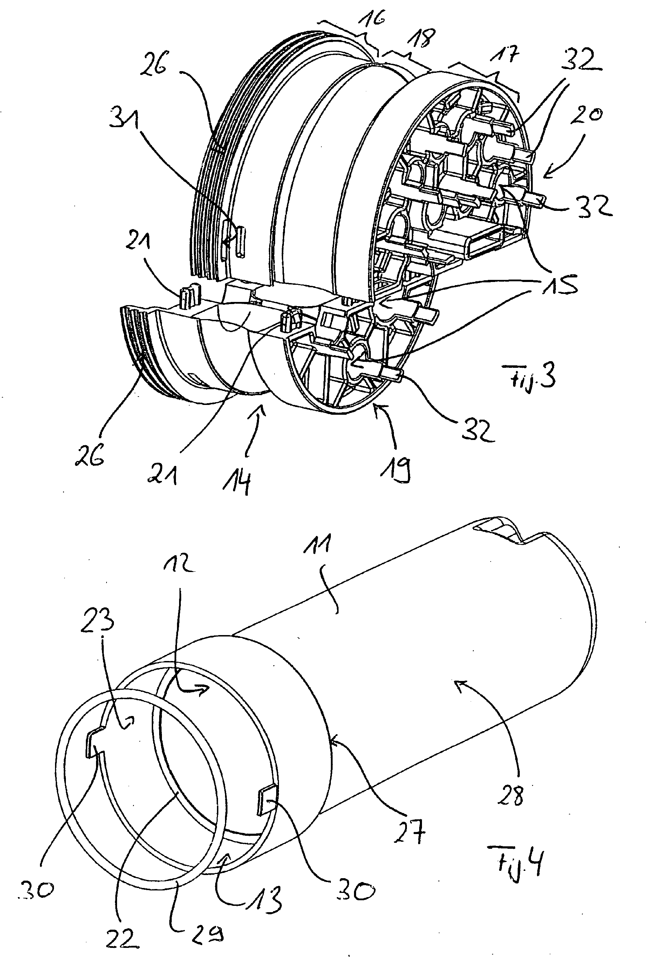

Fig. 1 zeigt eine erfindungsgemäße Kabelmuffe 10 in zusammengebautem Zustand, eine Explosionsdarstellung der Kabelmuffe gemäß Fig. 1 kann Fig. 2 entnommen werden. So ist die erfindungsgemäße Kabelmuffe 10 der Fig. 1 und 2 als Haubenmuffe ausgebildet und verfügt über einen als Abdeckhaube ausgebildeten Abdeckkörper 11, der gemäß Fig. 2 einen Innenraum 12 der Kabelmuffe 10 definiert. In eine Öffnung 13 des Abdeckkörpers 11 ist ein Dichtungskörper 14 einführbar, wobei über den Dichtungskörper 14 einerseits Lichtwellenleiterkabel in den Innenraum 12 der Kabelmuffe 10 einführbar und andererseits dieselben aus dem Innenraum 12 ausführbar sind. Das Einführen bzw. das Ausführen von Lichtwellenleiterkabeln in bzw. aus dem Innenraum 12 der Kabelmuffe 10 erfolgt über in den Dichtungskörper 14 integrierte Öffnungen 15. Der Dichtungskörper 14 der Kabelmuffe 10 ist in Fig. 3 in Alleindarstellung gezeigt, und zwar in einer Explosionsdarstellung.

Der Dichtungskörper 14 der erfindungsgemäßen Kabelmuffe 10 verfügt über zwei formstabile Endstücke 16 und 17, zwischen denen ein komprimierbares Gelelement 18 angeordnet ist. Wie Fig. 2 und 3 entnommen werden kann, ist der Dichtungskörper 14 zweiteilig ausgebildet und demnach aus zwei Hälften 19 und 20 zusammengesetzt. In zusammengebautem Zustand der Kabelmuffe 10 verläuft die Teilungsebene des Dichtungskörpers 14 dabei in Längsrichtung der Kabelmuffe 10 bzw. in Längsrichtung des Abdeckkörpers 11. Eine der beiden Hälften 19 des Dichtungskörpers 14 verfügt gemäß Fig. 2 und 3 über als Schnapphaken ausgebildete Vorsprünge 21, die in zusammengebauten Zustand des Dichtungskörpers 14 in nicht-dargestellte Ausnehmung der anderen Hälfte 20 des Dichtungskörpers 14 eingreifen und so die beiden Hälften 19, 20 des Dichtungskörpers 14 zusammenhalten.

Der Abdeckkörper 11 der erfindungsgemäßen Kabelmuffe 10 weist einen Anschlag 22 auf, der durch eine stufenartige Querschnittsveränderung einer Innenwand 23 des Abdeckkörpers 11 gebildet wird.

Der Anschlag 22 beschränkt die Einführtiefe des Dichtungskörpers 14 in den Innenraum 12 des Abdeckkörpers 11, wobei dann, wenn der Dichtungskörper 14 mit dem innenliegenden, formstabilen Endstück 17 in einem unkomprimierten Zustand am Anschlag 22 anliegt, der Dichtungskörper 17 zumindest abschnittsweise mit dem außenliegenden, formstabilen Endstück 16 aus dem Abdeckkörper 11 vorsteht bzw. aus demselben herausragt.

Ein Verschlusskörper 24 der Kabelmuffe 10 ist mit dem außenliegenden, formstabilen Endstück 16 des Dichtungskörpers 14 unter Komprimierung des Gelelements 18 verschraubbar, und zwar derart, dass durch das Verschrauben das außenliegende, formstabile Endstück 16 gegen das am Anschlag 22 anliegende, innenliegende Endstück 17 gedrückt wird. Wie Fig. 2 entnommen werden kann, verfügt der Verschlusskörper 24 hierzu über ein Innengewinde 25, über welches der Verschlusskörper 24 mit einem dem außenliegenden, formstabilen Endstück 16 des Dichtungskörpers 14 zugeordneten Außengewinde 26 verschraubt werden kann.

Der Verschlusskörper 24 ist sozusagen als Überwurfmutter ausgebildet, dessen Relativverschiebbarkeit zum Abdeckkörper 11 durch einen Anschlag 27 begrenzt wird, der durch eine stufenartige Querschnittsveränderung einer Außenwand 28 des Abdeckkörpers 11 gebildet ist.

Die erfindungsgemäße Kabelmuffe 10 verfügt weiterhin über mindestens ein Kompensationselement 29, über welches die mit Hilfe des Verschlusskörpers 24 aufgebrachte Kraft zum Komprimieren des Gelelements 18 des Dichtungskörpers 14 gespeichert werden kann. Im gezeigten Ausführungsbeispiel verfügt die erfindungsgemäße Kabelmuffe 10 über ein einziges Kompensationselement 29, welches als Elastomerring ausgebildet ist. In zusammengebautem Zustand der Kabelmuffe 10 ist das als Elastomerring ausgebildete Kompensationselement 29 zwischen dem innenliegenden, formstabilen Endstück 17 des Dichtungskörpers 14 und dem vom Abdeckkörper 11 gebildeten Anschlag 22 für den Dichtungskörper 14 angeordnet.

Wie bereits erwähnt, speichert das Kompensationselement 29 die mit Hilfe des Verschlusskörpers 24 aufgebrachte Kraft und übt auf den Dichtungskörper 24 bzw. das Gelelement 18 desselben permanent einen Kompressionsdruck 18 aus. Hierdurch ist es möglich, eine temperaturbedingte Änderung des Verhaltens des Gelelements 18 des Dichtungskörpers 14 auszugleichen bzw. zu kompensieren und so über einen breiten Temperaturbereich eine gute Dichtwirkung des Dichtungselements 14 zu gewährleisten.

Die Einbauposition des Dichtungskörpers 14 im Abdeckkörper 11 wird gemäß Fig. 2 durch dem Abdeckkörper 11 zugeordnete Vorsprünge 30 definiert, die in schlitzartige Ausnehmungen 31 des Dichtungskörpers 14 (siehe Fig. 3) einführbar sind. Gemäß Fig. 2 und 4 sind im bevorzugten Ausführungsbeispiel dem Abdeckkörper 11 zwei sich diametral gegenüberliegende Vorsprünge 30 zugeordnet, wobei jeder der Vorsprünge 30 in eine schlitzartige Ausnehmung 31 des Dichtungskörpers 14 einführbar ist. Die schlitzartigen Ausnehmungen 31 sind dabei dem außenliegenden, formstabilen Endstück 16 des Dichtungskörpers 14 zugeordnet.

Bei der Montage bzw. beim Zusammenbau der Kabelmuffe 10 wird demnach der Dichtungskörper 14 in die Öffnung 13 des Abdeckkörpers 11 eingeführt, wobei der Anschlag 22 des Abdeckkörpers 11 die Einführtiefe des Dichtungskörpers 14 in den Abdeckkörper 11 begrenzt. Der Dichtungskörper 14 steht dann, wenn derselbe in einem unkomprimierten Zustand mit dem innenliegenden Endstück am Anschlag 22 anliegt, zumindest mit dem Außengewinde 26 des außenliegenden, formstabilen Endstücks 16 gegenüber dem Abdeckkörper 11 vor bzw. ragt zumindest abschnittsweise aus demselben heraus. Der als Überwurfmutter ausgebildete Verschlusskörper 24 wird mit seinem Innengewinde 25 mit dem Außengewinde 26 des Dichtungskörpers 14 verschraubt, wobei hierbei bedingt dadurch, dass der Dichtungskörper 14 mit dem innenliegenden Endstück 17 am Anschlag 22 anliegt, das Gelelement 18 des Dichtungskörpers 14 komprimiert wird.

Hierbei wird auch das Kompensationselement 29 komprimiert, welches die zum Verschließen der Kabelmuffe 10 über den Verschlusskörper 24 aufgebrachte Kraft speichert und das Gelelement 18 des Dichtungskörpers 14 permanent unter einem Kompressionsdruck hält. Hierdurch kann eine temperaturbedingte Änderung des Verhaltens des Gelelements 18 ausgeglichen bzw. kompensiert werden.

Das Kompensationselement 29 ist vorzugsweise aus einem thermoplastischen Elastomer, kurz TPE genannt, gebildet. Als thermoplastisches Elastomer ist insbesondere thermoplastisches Polyuretan, kurz TPU bzw. PUR, geeignet. Ebenso ist es möglich, das Kompensationselement 29 aus einem terpolymeren Elastomer herzustellen, so z. B. aus Ethylen-Propylen-Kautschuk, kurz EPM genannt, oder aus Ethylen-Propylen-Dien-Kautschuk, kurz EPDM genannt. Weiterhin ist es möglich, das Kompensationselement 29 aus einem SilikonElastomer auszubilden.

Der Verschlusskörper 24 ist an beiden Enden offen ausgebildet, so dass derselbe im Sinne einer Überwurfmutter relativ zum Abdeckkörper 11 verschoben werden kann. Die Öffnungen 15 des Dichtungskörpers 14, die der Einführung bzw. Ausführung von Lichtwellenleiterkabeln in die Kabelmuffe 10 dienen, werden demnach vom Verschlusskörper 24 nicht verdeckt.

Eine weitere Besonderheit der erfindungsgemäßen Kabelmuffe 10 ist darin zu sehen, dass das innenliegende, formstabile Endstück 17 des Dichtungskörpers 14 benachbart zu den Öffnungen 15, die dem Einführen bzw. Ausführen von Lichtwellenleiterkabeln in bzw. aus dem Innenraum 12 der Kabelmuffe 10 dienen, stegartige Vorsprünge 32 aufweist, die integrale Zugabfangungselemente für die Lichtwellenleiterkabel bilden.

### Bezugszeichenliste

- 10: Kabelmuffe
- 11: Abdeckkörper
- 12: Innenraum
- 13: Öffnung
- 14: Dichtungskörper
- 15: Öffnung
- 16: Endstück
- 17: Endstück
- 18: Gelelement
- 19: Hälfte
- 20: Hälfte
- 21: Vorsprung
- 22: Anschlag
- 23: Innenwand
- 24: Verschlusskörper
- 25: Innengewinde
- 26: Außengewinde
- 27: Anschlag
- 28: Außenwand
- 29: Kompensationselement
- 30: Vorsprünge
- 31: Ausnehmung
- 32: Vorsprung

## Patentansprüche

1. Kabelmuffe zur strukturierten Ablage bzw. Handhabung von in Lichtwellenleiterkabeln geführten Lichtwellenleitern, insbesondere Haubenmuffe, mit einem einen Innenraum (12) definierenden Abdeckkörper (11), insbesondere einer Abdeckhaube, und mit einem in eine Öffnung (13) des Abdeckkörpers (11) einführbaren, der Einführung von Lichtwellenleiterkabeln in den Innenraum (12) und/oder der Ausführung von Lichtwellenleiterkabeln aus dem Innenraum (12) dienenden Dichtungskörper (14), der zwei formstabile Endstücke (16, 17) und ein zwischen den Endstücken angeordnetes, komprimierbares Gelelement (18) umfasst, wobei der Abdeckkörper (11) einen Anschlag (22) aufweist, an dem der Dichtungskörper (14) mit einem innenliegenden, formstabilen Endstück (17) anliegt, wobei ein Verschlusskörper (24) mit einem außenliegenden, formstabilen Endstück (16) des Dichtungskörpers (14) unter Komprimierung des Gelelements (18) verschraubbar ist, und dass mindestens ein Kompensationselement (29) die über den Verschlusskörper (24) aufgebrachte Kraft speichert und auf das Gelelement (18) permanent einen Kompressionsdruck ausübt.

2. Kabelmuffe nach Anspruch 1, **dadurch gekennzeichnet, dass** das oder jedes Kompensationselement (29) als Elastomerring ausgebildet ist, der zwischen dem innenliegenden, formstabilen Endstück (17) des Dichtungskörpers (14) und dem vom Abdeckkörper (11) gebildeten Anschlag (22) angeordnet ist.

3. Kabelmuffe nach Anspruch 1 oder 2, **dadurch gekennzeichnet, dass** der Verschlusskörper (24) ein Innengewinde (25) aufweist, über welches derselbe mit einem dem außenliegenden, formstabilen Endstück (16) des Dichtungskörpers (14) zugeordneten Außengewinde (26) verschraubt ist.

4. Kabelmuffe nach einem oder mehreren der Ansprüche 1 bis 3, **dadurch gekennzeichnet, dass** der Verschlusskörper (24) als Überwurfmutter ausgebildet ist.

5. Kabelmuffe nach einem oder mehreren der Ansprüche 1 bis 4, **dadurch gekennzeichnet, dass** der Anschlag (22) von einer stufenartigen Querschnittsveränderung einer Innenwand (23) des Abdeckkörpers (11) gebildet ist, wobei der Anschlag (22) die Einführtiefe des Dichtungskörpers (14) in den Innenraum (12) des Abdeckkörpers (11) beschränkt.

6. Kabelmuffe nach einem oder mehreren der Ansprüche 1 bis 5, **dadurch gekennzeichnet, dass** die Einführposition bzw. Einbauposition des Dichtungskörpers (14) relativ zum Abdeckkörper (11) durch mindestens einen dem Abdeckkörper (11) zugeordneten Vorsprung (30) und mindestens eine dem Dichtungskörper (14) zugeordnete Ausnehmung (31) bestimmt ist, derart, dass bei zusammengebauter Kabelmuffe der oder jeder Vorsprung (30) des Abdeckkörpers (11) in eine entsprechende Ausnehmung (31) des Dichtungskörpers (14) eingreift.

7. Kabelmuffe nach einem oder mehreren der Ansprüche 1 bis 6, **dadurch gekennzeichnet, dass** der Dichtungskörper (14) derart zweiteilig ausgebildet ist, dass eine Teilungsebene desselben in Längsrichtung der Kabelmuffe verläuft.

8. Kabelmuffe nach Anspruch 7, **dadurch gekennzeichnet, dass** mindestens einer Hälfte (19) des Dichtungskörpers (14) mindestens ein als Schnapphaken ausgebildeter Vorsprung (21) zugeordnet ist, der in einem zusammengebauten Zustand des Dichtungskörpers (14) in eine Ausnehmung der jeweils anderen Hälfte (20) des Dichtungskörpers (14) eingreift und so die beiden Hälften (19, 20) des Dichtungskörpers (14) zusammenhält.

9. Kabelmuffe nach einem oder mehreren der Ansprüche 1 bis 8, **dadurch gekennzeichnet, dass** das innenliegende, formstabile Endstück (17) des Dichtungskörpers (14) benachbart zu Öffnungen (15), die dem Einführen bzw. Ausführen von Lichtwellenleiterkabeln in bzw. aus dem Innenraum (12) der Kabelmuffe (10) dienen, Vorsprünge (32) aufweist, die integrale Zugabfangungselemente für die Lichtwellenleiterkabel bilden.

## Claims

1. Cable sleeve for structured storage and handling of optical waveguides which are guided in optical waveguide cables, in particular a shroud collar, having a covering body (11), in particular a covering shroud, which defines an internal area (12), and having a sealing body (14) which can be inserted into an opening (13) in the covering body (11), is used for insertion of optical waveguide cables into the internal area (12) and/or for passing optical waveguide cables out of the internal area (12) and has two dimensionally stable end pieces (16, 17) and a compressible gel element (18) which is arranged between the end pieces, wherein the covering body (11) has a stop (22) on which the sealing body (14) rests with an internal, dimensionally stable end piece (17), wherein a closure body (24) can be screwed to an external, dimensionally stable end piece (16) of the sealing body (14), with the gel element (18) being compressed, and wherein at least one compensation element (29) stores the force applied via the closure body (24) and permanently exerts a compression pressure on the gel element (18).

2. Cable sleeve according to Claim 1, **characterized in that** the or each compensation element (29) is in the form of an elastomer ring, which is arranged between the internal, dimensionally stable end piece (17) of the sealing body (14) and the stop (22) formed by the covering body (11).

3. Cable sleeve according to Claim 1 or 2, **characterized in that** the closure body (24) has an internal thread (25) via which it is screwed to an external thread (26) associated with the external, dimensionally stable end piece (16) of the sealing body (14).

4. Cable sleeve according to one or more of Claims 1 to 3, **characterized in that** the closure body (24) is in the form of a cap nut.

5. Cable sleeve according to one or more of Claims 1 to 4, **characterized in that** the stop (22) is formed by a step-like change in the cross section of an inner wall (23) of the covering body (11), wherein the stop (22) restricts the insertion depth of the sealing body (14) into the internal area (12) of the covering body (11).

6. Cable sleeve according to one or more of Claims 1 to 5, **characterized in that** the insertion position or installed position of the sealing body (14) relative to the covering body (11) is governed by at least one projection (30) associated with the covering body (11) and by at least one recess (31) associated with the sealing body (14), such that, when the cable sleeve is assembled, the or each projection (30) on the covering body (11) engages in a corresponding recess (31) in the sealing body (14).

7. Cable sleeve according to one or more of Claims 1 to 6, **characterized in that** the sealing body (14) is split in two such that a division plane of it runs in the longitudinal direction of the cable sleeve.

8. Cable sleeve according to Claim 7, **characterized in that** at least one half (19) of the sealing body (14) is associated with at least one projection (21), which
is in the form of a snap-action hook and engages in a recess in the respective other half (20) of the sealing body (14) when the sealing body (14) is in the assembled state, and thus holds the two halves (19, 20) of the sealing body (14) together.

9. Cable sleeve according to one or more of Claims 1 to 8, **characterized in that** the internal, dimensionally stable end piece (17) of the sealing body (14) has projections (32), which form integral strain-relief elements for the optical waveguide cables, adjacent to openings (15) which are used to pass optical waveguide cables into and out of the internal area (12) of the cable sleeve (10).

## Revendications

1. Manchon de câble pour la dépose structurée ou la manipulation de fibres optiques guidées dans des câbles à fibres optiques, notamment manchon à chapeau, comprenant un corps de recouvrement (11) définissant un espace interne (12), en particulier un chapeau de recouvrement, et un corps d'étanchéité (14) pouvant être inséré dans une ouverture (13) du corps de recouvrement (11), servant à l'introduction de câbles à fibres optiques dans l'espace interne (12) et/ou à faire ressortir des câbles à fibres optiques hors de l'espace interne (12), qui comprend deux embouts de forme stable (16, 17) et un élément de gel (18) pouvant être comprimé, disposé entre les embouts, le corps de recouvrement (11) présentant une butée (22) contre laquelle le corps d'étanchéité (14) s'applique avec un embout (17) de forme stable situé à l'intérieur, un corps de fermeture (24) pouvant être vissé avec un embout (16) de forme stable situé à l'extérieur, du corps d'étanchéité (14) par compression de l'élément de gel (18), et au moins un élément de compensation (29) accumulant la force appliquée par le biais du corps de fermeture (24) et exerçant sur l'élément de gel (18) une pression de compression permanente.

2. Manchon de câble selon la revendication 1, **caractérisé en ce que** le ou chaque élément de compensation (29) est réalisé sous forme de bague élastomère qui est disposée entre l'embout (17) de
forme stable, situé à l'intérieur, du corps d'étanchéité (14) et la butée (22) formée par le corps de recouvrement (11).

3. Manchon de câble selon la revendication 1 ou 2, **caractérisé en ce que** le corps de fermeture (24) présente un filetage interne (25) par le biais duquel celui-ci est vissé avec un filetage externe (26) associé à l'embout (16) de forme stable, situé à l'extérieur, du corps d'étanchéité (14).

4. Manchon de câble selon l'une quelconque ou plusieurs des revendications 1 à 3, **caractérisé en ce que** le corps de fermeture (24) est réalisé sous forme d'écrou d'accouplement.

5. Manchon de câble selon l'une quelconque ou plusieurs des revendications 1 à 4, **caractérisé en ce que** la butée (22) est formée par une variation de section transversale de forme étagée d'une paroi intérieure (23) du corps de recouvrement (11), la butée (22) limitant la profondeur d'insertion du corps d'étanchéité (14) dans l'espace interne (12) du corps de recouvrement (11).

6. Manchon de câble selon l'une quelconque ou plusieurs des revendications 1 à 5, **caractérisé en ce que** la position d'insertion ou la position de montage du corps d'étanchéité (14) par rapport au corps de recouvrement (11) est déterminée par au moins une saillie (30) associée au corps de recouvrement (11) et au moins un évidement (31) associé au corps d'étanchéité (14), de telle sorte que lorsque le manchon de câble est assemblé, la ou chaque saillie (30) du corps de recouvrement (11) vienne en prise dans un évidement correspondant (30) du corps d'étanchéité (14).

7. Manchon de câble selon l'une quelconque ou plusieurs des revendications 1 à 6, **caractérisé en ce que** le corps d'étanchéité (14) est réalisé en deux parties de telle sorte qu'un plan de division de celui-ci s'étende dans la direction longitudinale du manchon de câble.

8. Manchon de câble selon la revendication 7, **caractérisé en ce qu'**au moins une moitié (19) du corps d'étanchéité (14) est associée à au moins une saillie (21) réalisée sous forme de crochet d'encliquetage, qui vient en prise dans un état assemblé du corps d'étanchéité (14) dans un évidement de l'autre moitié respective (20) du corps d'étanchéité (14) et qui maintient ensemble ainsi les deux moitiés (19, 20) du corps d'étanchéité (14).

9. Manchon de câble selon l'une quelconque ou plusieurs des revendications 1 à 8, **caractérisé en ce que** l'embout (17) de forme stable, situé à l'intérieur, du corps d'étanchéité (14), présente, à côté d'ouvertures (15) qui servent à insérer ou à ressortir de câbles de fibres optiques dans ou hors de l'espace interne (12) du manchon de câble (10), des saillies (32) qui forment des éléments de réception de traction intégraux pour les câbles à fibres optiques.
